Europäisches Patentamt

European Patent Office

Office européen des brevets

(11) Numéro de publication: **0 392 575**
**A2**

(12) # DEMANDE DE BREVET EUROPEEN

(21) Numéro de dépôt: **90200618.8**

(51) Int. Cl.5: **F01N 3/28, F01N 1/00**

(22) Date de dépôt: **16.03.90**

(30) Priorité: **12.04.89 IT 6726489**

(43) Date de publication de la demande:
**17.10.90 Bulletin 90/42**

(84) Etats contractants désignés:
**BE DE ES FR GB GR NL SE**

(71) Demandeur: **I.R.T.I. ISTITUTO DI RICERCA E TRASFERIMENTI TECNOLOGICI ALLE IMPRESE S.R.L.**
**Via Aurelia 58**
**I-00165 Roma(IT)**

Demandeur: **Bonansea, Luciano**
**Viale XXV Aprile 116**

**I-10133 Torino(IT)**

Demandeur: **Carboni, Luigi**
**Via Argentero 2**
**I-10126 Torino(IT)**

(72) Inventeur: **Carboni, Luigi**
**Via Argentero 2**
**I-10126 Torino(IT)**

(74) Mandataire: **Patrito, Pier Franco, Dr. Ing.**
**Cabinet PATRITO BREVETTI Via Don Minzoni 14**
**I-10121 Torino(IT)**

(54) **Epurateur des gaz d'échappement ayant une activité catalytique, et silencieux, pour des moteurs à combustion interne.**

(57) Un épurateur des gaz d'échappement, ayant une activité catalytique, pour des moteurs à combustion interne, ayant aussi la fonction d'un silencieux d'échappement, lequel comporte deux éléments (24,40) à action catalytique constitués par des bandes (24) de tôle métallique recouverte par du matériau catalytiquement actif, enroulées en spiral et comportant nombre de saillies (25) embouties, inclinées, faisant fonction d'entretoises entre les spires d'enroulement de la bande (24) ainsi que de déflecteurs pour le flux des gaz d'échappement, et entre ces éléments (24, 40) un élément amortisseur de bruit (28-33), non dissipateur. De préférence les saillies inclinées (25) embouties dans la bande (24) de tôle constituant l'élément catalytique ont une conformation sinueuse, et la bande (24) comporte en outre, dans une région centrale entre lesdites saillies (25), des ouvertures (27) qui la traversent. L'élément silencieux non dissipateur (28-33) est constitué par nombre de chambres (30) qui se restreignent, dirigées à partir d'un passage central (29) substantiellement libre vers la périphérie du dispositif, et sa structure est réalisée moyennant nombre de disques annulaires (28) de tôle métallique, emboutis, couplés deux à deux et enfin empilés.

FIG. 2

## EPURATEUR DES GAZ D'ECHAPPEMENT AYANT UNE ACTIVITE CATALYTIQUE, ET SILENCIEUX, POUR DES MOTEURS A COMBUSTION INTERNE

La présente invention a pour objet un épurateur des gaz d'échappement, ayant une activité catalytique, pour des moteurs à combustion interne, ayant aussi la fonction d'un silencieux d'échappement.

On connait bien des épurateurs des gaz d'échappement ayant une activité catalytique, pour des moteurs à combustion interne. Dans les réalisations les plus répandues ces épurateurs comportent une masse céramique traversée en direction longitudinale par un grand nombre de petits canaux rectilignes, dont la section, habituellement carrée, est de l'ordre de 1 mm², et qui sont séparés l'un l'autre par des parois, dont l'épaisseur est d'environ 0,2 mm et dont les surfaces sont recouvertes par une couche déposée de platine. Le prix de revient extrèmement élevé d'une telle construction est bien évident. Les gaz d'échappement sont obligés de parcourir ces canaux de section réduite et, pendant ce parcours, ils lèchent efficacement le revêtement de platine, lequel exerce sur les gaz une action catalytique tendant à oxyder le monoxyde de carbone et les hydrocarbures non brûlés, ainsi qu'à décomposer les oxydes d'azote. Tant que le catalyseur est en des bonnes conditions, on obtient ainsi une épuration des gaz d'échappement, laquelle peut arriver à l'élimination du 80% à 90% des impuretés nuisibles. Toutefois cette condition efficace du catalyseur a une durée relativement courte, même dans le cas des moteurs à carburation d'essence, pour lesquels on indique en général une limite de parcours d'environ 5000 km, après laquelle l'épurateur des gaz d'échappement, en raison soit de l'empoisonnement du catalyseur, soit surtout des obstuctions qui se produisent, devient insuffisamment efficace et doit être remplacé. D'autre côté, de tels épurateurs ne sont nullement appliqués sur des moteurs à cycle diesel, parce que les composés sulfurés contenus dans les gaz d'échappement de ces moteurs mettraient hors service l'épurateur déjà dans le cours de quelques heures. Un premier inconvénient très grave de ces épurateurs réside donc dans leur durée trop réduite par rapport au prix de revient, et de leur caractère inadéquat pour les moteurs à cycle diesel. Mais ces épurateurs montrent aussi un autre inconvénient très grave, consistant dans la résistance élevée opposée au flux des gaz d'échappement par les petits canaux de la masse céramique de l'épurateur. Cette résistance élevée donne lieu à une considérable contrepression à la décharge du moteur, et par conséquent à une grave réduction de son rendement.

Une certaine amélioration a été portée à ces épurateurs ayant une activité catalytique en remplaçant la masse céramique perforée par une tôle plissée, recouverte par du matériau catalytique et repliée de façon adéquate pour déterminer un grand nombre de canaux rectilignes de section réduite. Cette construction résulte considérablement plus économique, toutefois les inconvénients de la durée réduite et de la résistance élevée au flux des gaz demeurent inchangés.

Les épurateurs des gaz d'échappement qu'on a mentionné n'ont aucune fonction spécifique comme silencieux, bien qu'en pratique ils donnent lieu à une certaine réduction du bruit en raison précisément, et seulement, de la résistance élevée opposée au flux des gaz d'échappement.

Le but de la présente invention est de réaliser un épurateur des gaz d'échappement, pour des moteurs à combustion interne, qui doit être de construction relativement économique, qui doit présenter une grande efficacité dans l'épuration tout en n'opposant pas une résistance élevée au flux des gaz d'échappement, et qui doit en même temps développer une action efficace comme silenciex, cette action n'étant, elle aussi, pas accompagnée par aucune résistance élevée opposée au flux des gaz d'échappement.

Ce but est atteint, suivant l'invention, en ce que l'épurateur comporte en combinaison: au moins un élément ayant une action catalytique, constitué par une bande de tôle métallique, recouverte par un matériau ayant une activité catalytique et enroulée en spiral, ladite bande com portant nombre de saillies embouties, inclinées par rapport aux directions longitudinale et transversale de la bande et faisant fonction d' entretoises entre les spires d'enroulement de la bande, ainsi que de déflecteurs pour le flux des gaz d'échappement; et au moins un élément amortisseur de bruit, substantiellement non dissipateur.

En raison de ces caractéristiques, l'élément ayant une action catalytique peut être fabriqué d'une façon relativement économique, et les passages formés dans cet élément pour le flux des gaz d'échappement, étant délimités par les saillies inclinées et donc s'étendant d'une manière hélicoïdale, donnent lieu à un lèchement efficace des surfaces catalitiques par les gaz d'échappement, même sans exiger que ces passages soient très étroits. Il s'ensuit, d'un côté, que l'épurateur n'oppose pas une grande résistance aux gaz d'échappement, et qu'il ne trouble pas d'une façon appréciable le rendement du moteur, et d'autre côté que les passages sont obstrués par les dépôts avec une vitesse bien plus réduite, de sorte que la durée de l'élément est bien plus grande de celle habituelle.

D'autre côté, l'absence d'une résistance au flux a pour conséquence que l'élément catalytique, en soi, donne une contribution moindre comme silencieux d'échappement, mais à cela pourvoit sa combinaison avec un élément amortisseur du bruit; ce dernier, de son côté, étant d'un type substantiellement non dissipateur, n'introduit pas des résistances ultérieures appréciables au flux des gaz d'échappement. Comme résultat, les gaz d'échappement peuvent être épurés et réduits au silence d'une manière efficace, sans introduire aucune réduction appréciable dans le rendement du moteur, et en assurant à l'épurateur-silencieux une longue durée utile. Une conséquence de ces caractéristiques est aussi que l'épurateur-silencieux suivant l'invention peut être appliqué avec avantage aussi à la décharge des moteurs à cycle diesel.

De préférence lesdites saillies inclinées embouties dans la bande de tôle destinée à constituer l'élément catalytique ont une conformation sinueuse, montrant dans une moitié de chaque saillie une courbure dirigée en un sens et dans l'autre moitié une courbure dirigée dans le sens opposé. Cette conformation assure une efficacité particulière dans le lèchement des surfaces catalytiques de la part des gaz, et en même temps donne aux saillies une efficacité particulière dans leur fonction comme entretoises entre les spires de l'enroulement en spiral de la bande.

De préférence, en outre, la bande comporte aussi, dans une région centrale entre lesdites saillies, des ouvertures qui la traversent. Ces ouvertures aident la production de la bande et, dans le fonctionnement, donnent lieu à une communication mutuelle entre les passages pour le gaz, définis par la bande, et par conséquent à des phénomènes de turbulence qui favorisent un lèchement efficace des surfaces catalytiques de la part des gaz; de plus, ces ouvertures donnent lieu à des anastomoses entre les différents passages, qui sont très utiles pour rendre encore possible un fonctionnement acceptable lorsque certains passages commencent à être bouchés. Cela aussi contribue à prolonger la durée utile de l'épurateur.

De préférence l'élément silencieux non dissipateur est constitué par nombre de chambres qui se restreignent, dirigées à partir d'un conduit central substantiellement libre vers la périphérie du dispositif. Une telle structure assure un amortissement efficace de toutes les composantes de fréquence du bruit, sans donner lieu à une dissipation d'énergie appréciable. La structure de cet élément silencieux peut être réalisée économiquement moyennant nombre de disques annulaires de tôle métallique, emboutis, couplés deux à deux et enfin empilés. De préférence, en outre, ces disques sont perforés dans leurs régions situées entre les chambres qui se restreignent. Cela donne lieu à une communication entre les espaces situés entre les couples empilées de disques, espaces dans lesquels a lieu l'amortissement du bruit de fond transporté par la partie des gaz d'échappement qui n'agit pas sur les chambres qui se restreignent mais sur les espaces situés entr'elles.

De préférence, deux éléments successifs ayant une action catalytique sont prévus, et l'élément silencieux est interposé entre lesdits éléments ayant une action catalytique.

De préférence, enfin, à la sortie de l'épurateur est encore prévue une chambre de récolte pour des déchets solides, laquelle communique par des ouvertures avec le passage pour les gaz d'échappement. Les déchets solides résultant des réactions chimiques activées par les catalyseurs peuvent ainsi être collectés sans les déverser dans l'air ambiant, et ils peuvent être déchargés de temps en temps de la chambre de récolte dans laquelle ils se sont accumulés.

Ces caractéristiques et d'autres et les avantages de l'objet de l'invention ressortiront plus clairement de la suivante description d'un mode de réalisation préféré, mais ayant le caractère d'un exemple non limitatif, schématiquement représenté dans les dessins annexés, dans lesquels:

Fig. 1 est une vue de l'extérieur en plan, à une échelle réduite, du dispositif épurateur-silencieux;

Fig. 2 en montre une section verticale faite suivant la ligne II-II de la figure 1;

Fig. 3 en montre une section transversale faite suivant la ligne brisée III-III de la figure 2;

Fig. 4 montre à une échelle plus grande une section transversale d'un élément ayant une action catalytique, faite suivant la ligne IV-IV de la figure 2;

Fig. 5 montre en plan le développement d'un tronçon de la bande de tôle constituant l'élément ayant une action catalytique;

Fig. 6 montre à une échelle plus grande une section transversale de l'élément silencieux, faite suivant la ligne VI-VI de la figure 2;

Fig. 7 montre une section diamétrale d'un couple de disques constituant l'élément silencieux, faite suivant la ligne VII-VII de la figure 6; et

Fig. 8 montre une modification à la construction du boîtier de l'élément silencieux.

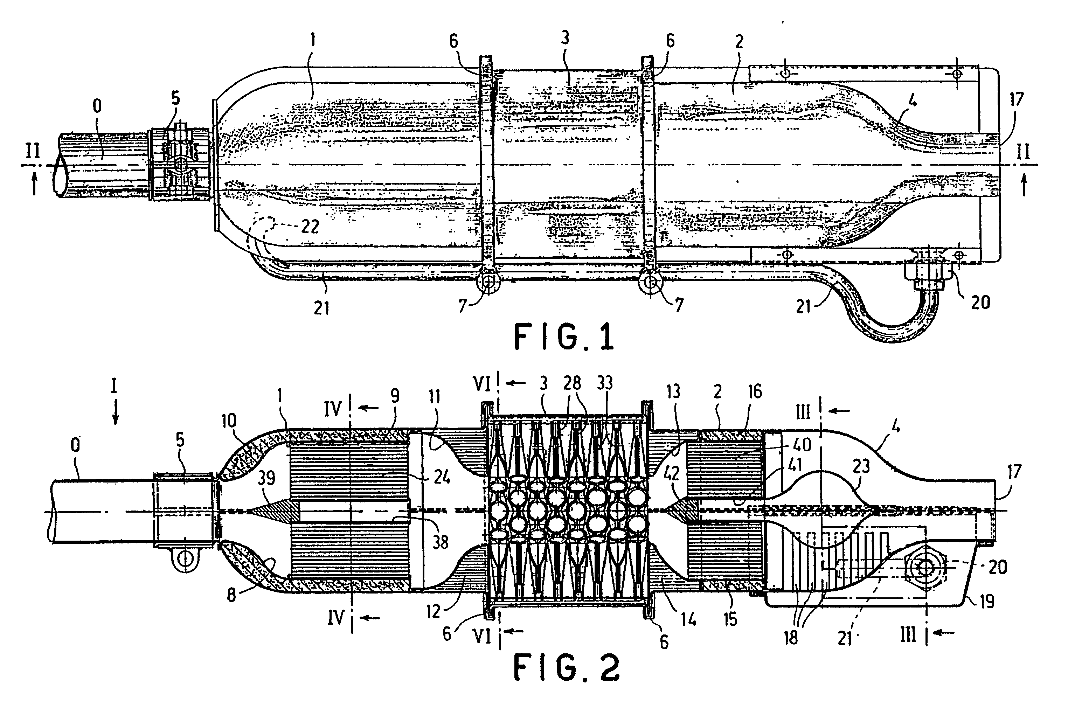

Faisant référence d'abord aux figures 1 et 2 montrant l'ensemble d'un dispositif épurateur-silencieux suivant l'invention, par la référence 0 on a indiqué un tronçon final d'un tuyau d'échappement d'un moteur à combustion interne auquel l'épurateur est connecté par un collier serre-tube 5. Le dispositif est délimité par une première partie de boîtier 1, contenant un premier élément ayant une action catalytique, par une deuxième partie de boîtier 2, contenant un deuxième élément ayant une action catalytique, par une troisième partie de boîtier 3, interposée entre les parties 1 et 2, contenant un élément silencieux, et par une quatrième partie de boîtier 4, destinée à la récolte des déchets solides et à la décharge des gaz épurés dans l'air ambiant. Les parties de boîtier 2 et 4 peuvent avantageusement être constituées par un élément constructif unique. Les parties de boîtier 1, 2 et 4 sont constituées, de préférence, par des couples de coques de tôle emboutie d'acier inoxidable, réunies entre elles par des flasques suivant le diamètre horizontal; la partie de boîtier 3 est constituée, de préférence, par un tronçon de tuyau d'acier inoxidable, pourvu de flasques, connecté aux parties de boîtier 1 et 2 par des colliers 6 munis de moyens de serrage 7.

De l'entrée du dispositif, en correspondance du collier 5, se commence un conduit divergeant 8 prolongé par un conduit cylindrique 9; ces parties sont faites, de préférence, d'acier inoxidable, et elles sont traversées par des trous. L'espace interposé entre les parties 8, 9 et le boîtier 1 est rempli par du matériau comme de la laine de cuivre 10. Dans le conduit cylindrique 9 est logé le premier élément ayant une action catalytique, qui sera décrit plus avant. Au conduit cylindrique 9 fait suite un conduit convergeant 11 qui débouche dans le centre de l'élément silencieux, logé dans la partie 3 du boîtier et qui sera décrit plus avant. De préférence, un matériau isolant thermo-acoustique 12 est inséré entre le conduit convergeant 11 et le boîtier extérieur 1.

A' la sortie de l'élément silencieux logé dans la partie 3 du boîtier est prévu un conduit divergeant 13, prolongé par un conduit cylindrique 15 perforé. De préférence, l'espace entre le conduit divergeant 13 et le boîtier extérieur 2 est rempli par un matériau isolant thermo-acoustique 14, tandis que l'espace entre le conduit cylindrique perforé 15 et le boîtier extérieur 2 est rempli, de préférence, par de la laine de cuivre 16. Dans le conduit cylindrique 15 est logé le deuxième élément ayant une action catalytique, qui sera décrit plus avant.

La quatrième partie 4 du boîtier se restreint vers une ouverture de décharge 17 qui débouche dans l'air ambiant. La partie inférieure de cette section du boîtier est traversée par des ouvertures 18 qui débouchent dans un tiroir de récolte 19. Un tuyau 21 est connecté en 20 au tiroir 19 et il s'étend vers la partie antérieure du dispositif, dans l'intérieur duquel il se termine par une ouverture 22 dirigée dans le sens du flux des gaz, de sorte à en recevoir une action d'aspiration. Dans l'intérieur de la quatrième partie 4 du boîtier est logé un corps fusiforme central 23 conformé de sorte à accompagner le flux des gaz, lequel corps peut être fabriqué en tôle d'acier inoxidable.

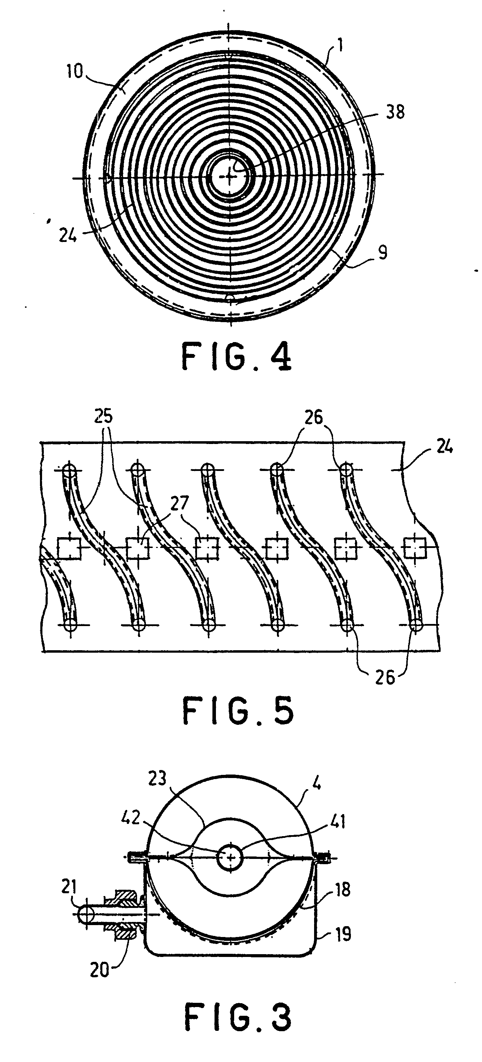

Le premier élément ayant une action catalytique, disposé dans le conduit cylindrique 9, est constitué (figure 4) par l'enroulement en spiral d'une bande de tôle 24, dont la conformation ressort en détail de la figure 5. Dans la bande de tôle 24 sont embouties, à des distances régulières et suivant une direction inclinée, des saillies 25 qui de préférence, comme montré, comportent en deux parties successives des courbures opposées, de sorte qu'elles montrent une forme générale sinueuse, en S étendu. La bande 24 peut être taillée d'une tôle d'acier inoxidable de 5/10 mm d'épaisseur, et la hauteur des saillies 25 peut être de l'ordre de 2 mm, avec un pas de l'ordre de 26 mm. De préférence les saillies 25 s'étendent entre des trous d'extrémité 26, ce qui en rend plus facile l'usinage. En outre il est avantageux que des ouvertures 27 soient prévues le long de la ligne centrale longitudinale de la bande 24. Ces ouvertures 27 sont réalisées avant l'emboutissage des saillies 25, de sorte que, en vertu de la présence des ouvertures 27, la bande de tôle 24 peut être usinée pas à pas d'une façon très économique et précise. La bande 24 ainsi conformée est enroulée en spiral autour d'un noyau constitué par un tuyau 38 fermé à l'une de ses extrémités par un bouchon 39. Comme on le comprendra, pendant l'enroulement de la ban de 24 les saillies 25 établissent exactement la distance entre les spires de l'enroulement, et ensuite elles définissent entre lesdites spires des passages de section considérable, au cours sinueux. De leur côté, les trous 26 et les ouvertures 27 offrent des communications limitées entre les différentes spires d'enroulement de la bande 24.

Le deuxième élément ayant une action catalytique, disposé dans le conduit cylindrique 15, est constitué lui-aussi par une bande de tôle 40 enroulée en spiral sur un noyau central 41 fermé par un bouchon 42. La structure de la bande de tôle 40 peut être similaire du tout de celle de la bande de tôle 24 déjà décrite, à l'exception des proportions, qui en général peuvent être quelque peu plus réduites. En vue de cela, cette bande 40 ne sera pas décrite plus en détail. Le noyau central 41 du deuxième élément ayant une action catalytique peut être constitué avantageusement par un prolongement du corps fusiforme 23 déjà décrit.

Les bandes 24 et 40 par lesquelles sont fabriqués les éléments ayant une action catalytique sont recouvertes par un dépôt d'une matière adéquate, ayant une action catalytique utile sur les gaz d'échappement, soit dans le sens d'oxyder le monoxyde de carbone et les hydrocarbures non brûlés, soit dans le sens de réduire les oxydes d'azote, soit encore dans le sens de décomposer ou de modifier des autres substances, comme les composés sulfurés, qui sont présentes spécialement dans les gaz d'échappement des moteurs à cycle diesel. Les substances catalytiques appliquées sur la tôle 24 et sur la tôle 40 peuvent être identiques ou différentes entr'elles, et elles peuvent être différentes suivant l'application prévue pour l'épurateur. A titre d'exemple préféré on indique que la bande 24 constituant le premier élément ayant une action catalytique peut être avantageusement recouverte par du palladium, pour agir spécialement sur le monoxyde de carbone, sur les substances non brûlées et sur les oxydes d'azote, tandis que la tôle 40 constituant le deuxième élément ayant une action catalytique peut être avantageusement recouverte par du tantale, pour agir spécialement sur les composés sulfurés.

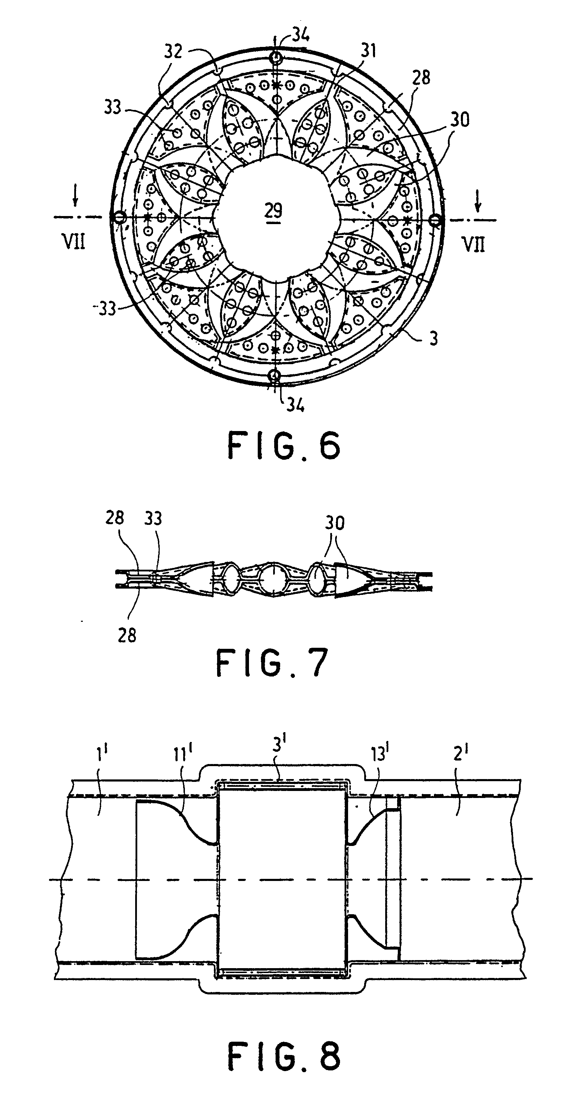

L'élémént silencieux logé dans la troisième partie 3 du boîtier est réalisé moyennant des disques annulaires en tôle emboutie, par exemple d'acier inoxydable, conformés comme il ressort de la figure 6. Chaque disque 28 comporte une ouverture centrale 29 libre, de laquelle se commencent des creusages emboutis 30 dirigés vers la périphérie, qui vont sse restreignant et se terminent par des ouvertures 31 bien plus petites des embouchures centrales des creusages, par exemple ayant un diamètre égal à 1/4 du diamètre des embouchures. Ces disques, ainsi emboutis, sont couplés symétriquement deux à deux, comme le montre la figure 7, en les solidarisant par quelques points de soudure. Les creusages correspondants des deux disques forment ainsi des chambres qui s'étendent, à partir de l'ouverture centrale libre 29, en se restreignant vers la périphérie, où elles se raccordent aux ouvertures 31, ainsi constituant comme des trompes renversées. Dans le mode de réalisation représenté les disques ont une symétrie octogonale. Les couples de disques peuvent donc être empilés en les déplaçant angulairement de 22° 30' l'une par rapport à l'autre, en réalisant ainsi la disposition qui ressort de la figure 2. Pour faciliter le montage de cette pile de couples de disques, chaque disque comporte le long de sa périphérie seize encoches 32 disposées à des distances uniformes, lesquelles sont faites correspondre à des glissières 34 appliquées à la partie 3 du boîtier, de sorte à assurer une superposition ordonnée des couples de disques. De plus, les disques sont percés par nombre de trous 33 (quatre-vingts trous dans l'exemple) qui les traversent dans les régions non intéressées par les creusures restreintes 30.

Le fonctionnement de ce dispositif épurateur-silencieux est le suivant. Les gaz d'échappement venant du tuyau d'échappement 0 entrent dans le conduit divergeant 8 qui les porte au premier élément 24 ayant une action catalytique. Une partie de ces gaz s'écoule par les perforations des conduits 8 et 9 dans le remplissage de laine de cuivre 10, où elle est soumise à une action chimique capable de neutraliser une partie des oxydes d'azote. Ensuite les gaz parcourent les passages définis par les saillies sinueuses 25 entre les spires de la tôle 24 enroulée en spiral, constituant le premier élément ayant une action catalytique. Ces passages sont relativement larges (avec les dimensions indiquées ils ont une section de passage de l'ordre de 50 mm²), de sorte qu'ils ne donnent pas lieu à des pertes de charge considérables, mais la disposition inclinée et la forme sinueuse des passages assurent un lèchement efficace de la surface catalytique déposée sur la tôle 24, de sorte que les gaz son traités avec efficacité par la substance catalytiquement active présente, et ils sont épurés.

Le conduit convergeant 11 porte les gaz ainsi dépurés au passage intérieur 29 de l'élément silencieux constitué par les disques 28 empilés. Bien qu'ils parcourent cet élément sans subir des pertes de charge, en vertu de la présence du·passage central libre 29, les gaz qui transportent les ondes sonores produites par le moteur transmettent leurs variations de pression aux chambres 30 qui, par leur forme qui se restreint en forme de trompe renversée, affaiblissent efficacement, mais d'une façon non dissipatrice, le bruit transporté. En vertu de la forme des chambres, qui va se restreignant, on ne rencontre pas des vrais phénomènes de resonance, et l'affaiblissement s'étend substantiellement au champ de fréquences tout entier constituant le bruit. Les embouchures des chambres 30 vers le passage central 29 occupent la plupart de la surface périmétrale de ce passage, mais elles ne peuvent pas l'occuper totalement; donc, une partie des perturbations de pression transportées par les gaz doit pénétrer dans les espaces entre les disques 28. Sur ces perturbations agissent les trous 33 des disques 28, en permettant une transmission des variations de pression dans la direction longitudinale de l'élément silencieux, et donc une compensation de ces pressions parmi les différents espaces e, par conséquent, la neutralisation du bruit de fond transporté.

En aval de l'élément silencieux 28, le conduit divergeant 13 distribue à nouveau le flux des gaz d'échappement au deuxième élément ayant une activité catalytique 40, lequel répète l'action déjà effectuée par le premier élément ayant une action catalytique 24, d'une façon entière ment similaire au point de vue physique, mais avec des caractéristiques d'intervention chimique différentes si, comme il est préféré, les substances catalytiques déposées sur les deux éléments sont différentes. En employant des substances catalytiques capables d'effectuer des actions d'une certaine façon complémentaires entr'elles, comme dans le cas préféré de l'emploi de palladium et de tantale, on peut arriver à une dépuration des gaz d'échappement extrèmement poussée, par rapport à toutes les classes différentes de matières polluantes contenues.

Certaines parties des substances qui se forment par les réactions chimiques activées par les catalyseurs sont solides. A la sortie du deuxième élément ayant une action catalytique 40 les gaz qui, en vertu de l'inclinaison des saillies embouties dans la bande de tôle constituant l'élément ayant activité catalytique, ont un mouvement giratoire, ont la tendance à accumuler les parties solides plus lourdes contre la surface intérieure du conduit convergeant défini par la quatrième partie 4 du boîtier; la présence du corps fusiforme 23 favorise ce phénomène. Pour cette raison les parties solides, en rencontrant les ouvertures 18, passent dans le tiroir 19, où elles se déposent, au lieu d'être déchargées dans l'air ambiant par la sortie 17 avec les gaz d'échappement épurés. Le tube 21 qui, par son embouchure 22, reçoit une légère action aérodynamique d'aspiration de la part des gaz d'échappement qui entrent dans le dispositif épurateur-silencieux, maintient dans le tiroir 19 une légère dépression, laquelle favorise l'entrée et le maintien desdits déchets solides. Ensuite ceux-ci, de temps en temps, peuvent être déchargés en démontant seulement le tiroir 19, sans qu'il soit nécessaire de démonter tout le dispositif du véhicule sur lequel il est installé.

Bien entendu, des différentes modifications peuvent être portées au mode de réalisation qu'on a décrit à titre d'exemple. Par exemple, comme le montre la figure 8, les différentes parties de boîtier de 1' à 4', et donc aussi le boîtier 3' de l'élément silencieux, peuvent être définies par deux demi-coques couplées, lesquelles peuvent aussi constituer les raccords 11' et 13'. Le choix parmi les différents systèmes de construction possibles peut être effectué par l'auteur du projet en tenant compte de différentes évaluations, y incluses celles se rapportant aux moyens de production à disposition. La disposition inclinée et éventuellement la forme sinueuse des saillies 25 peuvent être modifiées en des manières différentes et, le cas échéant, aussi d'une façon différente pour les deux éléments ayant une action catalytique. Dans certains cas un élément ayant une action catalytique peut être suffisant à lui seul, et dans tel cas il peut être disposé soit en amont, soit en aval de l'élément silencieux. Ce dernier pourrait avoir aussi une structure différente de celle décrite, à condition qu'il résulte substantiellement non dissipateur ou, tout au moins, peu dissipateur. Enfin, le choix des substances catalytiquement actives déposées sur les bandes constituant les éléments ayant une action catalytique peut être différemment dirigée, en plus que sur les substances indiquées, et par exemple on peut envisager l'emploi de platine, de l'ainsi-dit noir de platine, de carbone-palladium ou bien d'autres catalyseurs connus ou développés particulièrement pour cet emploi. Bien entendu, d'autre part, tout détail de réalisation peut être remplacé par ses équivalents techniques.

## Revendications

1 . Epurateur des gaz d'échappement, ayant une activité catalytique, pour des moteurs à combustion interne, ayant aussi la fonction d'un silencieux d'échappement, caractérisé en ce qu'il comporte en combinaison: au moins un élément (24,40) ayant une action catalytique, constitué par une bande (24) de tôle métallique, recouverte par un matériau ayant une activité catalytique et enroulée en spiral, ladite bande (24) comportant nombre de saillies (25) embouties, inclinées par rapport aux directions longitudinale et transversale de la bande (24) et faisant fonction d'entretoises entre les spires d'enroulement de la bande, ainsi que de déflecteurs pour le flux des gaz d'échappement; et au moins un élément amortisseur de bruit (28-33), substantiellement non dissipateur.

2 . Epurateur-silencieux des gaz d'échappement suivant la revendication 1, caractérisé en ce que lesdites saillies inclinées (25) embouties dans la bande de tôle (24) constituant l'élément (24,40) ayant une action catalytique ont une conformation sinueuse, montrant dans une moitié da chaque saillie une courbure dirigée en un sens et dans l'autre moitié une courbure dirigée dans le sens opposé.

3 . Epurateur-silencieux des gaz d'échappement suivant la revendication 1, caractérisé en ce que ladite bande de tôle (24) constituant l'élément (24,40) ayant une action catalytique comporte aussi des ouvertures (26,27) qui la traversent.

4 . Epurateur-silencieux des gaz d'échappement suivant la revendication 3, caractérisé en ce qu'au moins une partie (27) des ouvertures traversant ladite bande (24) sont disposées dans une région longitudinale centrale entre lesdites saillies (25).

5. Epurateur-silencieux des gaz d'échappement suivant la revendication 1, caractérisé en ce que l'élément silencieux non dissipateur (28-33) est constitué par nombre de chambres (30) qui se restreignent, dirigées à partir d'un conduit central (29) substantiellement libre vers la périphérie du dispositif.

6. Epurateur-silencieux des gaz d'échappement suivant la revendication 5, caractérisé en ce que la structure de l'élément silencieux (28-33) est réalisée moyennant nombre de disques annulaires (28) de tôle métallique dans lesquels sont embouties des demi-chambres (30) qui se restreignent, couplés deux à deux et enfin empilés.

7. Epurateur-silencieux des gaz d'échappement suivant la revendication 6, caractérisé en ce que lesdits disques (28) sont perforés (33) dans leurs régions situées entre les chambres (30) qui se restreignent.

8. Epurateur-silencieux des gaz d'échappement suivant la revendication 1, caractérisé en ce qu'il comporte deux éléments successifs (24 et 40) ayant une action catalytique, et que l'élément silencieux (28-33) est interposé entre lesdits deux éléments (24,40) ayant une action catalytique.

9 . Epurateur-silencieux des gaz d'échappement suivant la revendication 1, caractérisé en ce qu'à la sortie de l'épurateur (40) est prévue une chambre (19) de récolte pour des déchets solides, laquelle communique par des ouvertures (18) avec le passage (4) pour les gaz d'échappement.

10 . Epurateur-silencieux des gaz d'échappement suivant la revendication 9, caractérisé en ce qu'un corps fusiforme (23) est inséré à la sortie de l'épurateur (40) pour favoriser le passage des déchets solides par lesdites ouvertures (18) vers la chambre de récolte (19).

11. Epurateur-silencieux des gaz d'échappement suivant la revendication 9, caractérisé en ce que ladite chambre de récolte est définie par un tiroir (19) qu'on peut ouvrir pour décharer les déchets solides accumulés.

12. Epurateur-silencieux des gaz d'échappement suivant la revendication 9, caractérisé en ce que ladite chambre de récolte (19) communique par un tuyau (21) avec une prise de dépression aérodynamique (22) activée par le flux des gaz d'échappement.

FIG.1

FIG.2

FIG. 4

FIG. 5

FIG. 3

FIG.6

FIG.7

FIG.8